# EUROPEAN PATENT APPLICATION

(11) **EP 4 445 814 A1**
(43) Date of publication of application: **16.10.2024**
(21) Application number: 23168048.9
(22) Date of filing: 14.04.2023
(51) Int. Cl.: A47J 43/07

(54) **COOKING POT EMERGENCY UNLOCKING CIRCUIT AND FOOD PROCESSOR COMPRISING THE COOKING POT EMERGENCY UNLOCKING CIRCUIT**

(71) Applicant: Suntek Industries (Hong Kong) Company Limited, Shatin, New Territories (HK)
(72) Inventor: WONG, Wing Wai, Hong Kong (HK); POON, Ho Kai, Hong Kong (HK)
(74) Representative: Gunzelmann, Rainer

(57) **Abstract**

A cooking pot emergency unlocking circuit designed for unlocking a cooking pot (3) of a food processor (1) from a base (2) of the food processor (1) in case of power failure is described. The cooking pot emergency unlocking circuit comprises a power storing circuit part (C1, C2) adapted to store power when the cooking pot emergency unlocking circuit is connected to the external power source (P) and receives power therefrom. The power storing circuit part (C1, C2) is further adapted to supply stored power to a motor (M) of the cooking pot locking mechanism when and only when the cooking pot emergency unlocking circuit does not receive power from the external power source (P). The motor (M) is operatively coupled to the cooking pot locking mechanism and configured to operate the cooking pot locking mechanism to selectively enter a lock position or an unlock position. Thereby, the cooking pot locking mechanism is automatically unlocked when the cooking pot locking mechanism is in the lock position and no power is available from the external power source.

## Description

The present disclosure relates to a cooking pot emergency unlocking circuit designed for unlocking a cooking pot of a food processor from a base of the food processor in case of power failure, and to a food processor comprising the cooking pot locking mechanism.

For operation of the food processor during regular power supply, i.e., when the food processor is connected to an external power source suited to provide the energy necessary for operating the food processor to process food, the food processor base comprises a cooking pot locking mechanism for selectively locking the cooking pot to the food processor base, and a motor operatively coupled to the cooking pot locking mechanism, the motor being configured to operate the cooking pot locking mechanism to selectively enter a lock position or an unlock position. Said cooking pot locking mechanism is necessary to prevent removal of the cooking pot from the base during cooking operation while energy from the external power source is available and the food processor is operating in a food processing mode in which removal of the cooking pot is undesired. Thus, according to a food processor control, the cooking pot is locked against removal from the base by the cooking pot locking mechanism when the food processor is operating in a food processing mode and is removable from the base, i.e., released by the cooking pot locking mechanism, for example, when the food processor is operating in a preparation mode in which the user is adding ingredients to the cooking pot or when food processing is finished and the user can remove the processed food from the cooking pot. Preventing removal of the cooking pot from the base during cooking operation is a security aspect but may cause the cooking pot to get stuck in or on the base in case of occurrence of a power failure or power cut-off during the food processor's food processing mode operation - which is a problem.

The problem of unlocking a latch assembly in case of a power failure has already been dealt with in document US 6,363,755 B1. This document is directed to a lock assembly for preventing access to a spin basket of a clothes washing machine while the spin basket is in motion. The lock assembly comprises a latch assembly for locking a lid of the washing machine against opening during an operation mode of the washing machine in which opening of the lid is undesired to prevent a user hurting him- or herself by the spinning basket. While power is available to the washing machine, an "unlock signal" capacitor of a logic circuitry of the washing machine, the logic circuitry designed to control the latch assembly, is periodically charged to provide the power necessary to unlock the latch assembly in case the washing machine comes to a stop and discharged if the washing machine is still operating and no unlocking is necessary. To provide an emergency unlock signal in case of power failure, the logic circuitry includes the logic to charge the "unlock signal" capacitor by an upstream "lock signal" capacitor in case of power cut-off during operation of the washing machine so that, after a short delay time, the "unlock signal" capacitor provides the power necessary for unlocking the latch assembly in case of power failure.

The present disclosure provides a different emergency unlocking circuit which in no scenario uses power stored in a capacitor - which, during power being available, is configured to provide its stored power for locking two components together - for unlocking these two components in case of power failure. The technical field differs in that the emergency unlocking circuit of the present disclosure is used and designed for unlocking two components of a food processor, namely a cooking pot from a food processor base, in case of power failure. Moreover, the circuit structure differs.

A cooking pot emergency unlocking circuit according to claim 1 is designed for unlocking a cooking pot of a food processor from a base of the food processor in case of power failure. The food processor base comprises a cooking pot locking mechanism for releasably locking the cooking pot to the food processor base and a motor operatively coupled to the cooking pot locking mechanism. The motor is configured to operate the cooking pot locking mechanism to selectively enter a lock position or an unlock position. This may be accomplished by operating the motor in a forward and a reverse direction, wherein, for example, motor operation in the forward direction is adapted to cause the cooking pot locking mechanism to move to and enter its lock position so as to lock the cooking pot to the base and motor operation in the reverse direction is adapted to cause the cooking pot locking mechanism to move to and enter its unlock position so as to allow removal of the cooking pot from the base. The operation direction of the motor can be chosen or triggered by means of a relay configured to alter the power flow direction through the motor and, thereby, changing the direction in which the motor operates, i.e., a rotor of the motor rotates around a stator of the motor.

The cooking pot emergency unlocking circuit is configured to be connected to an external power source for receiving power supply therefrom and is connected to the motor of the cooking pot locking mechanism. For the external power source being an AC-power source, a voltage converter configured to regulate AC-power to DC-power of a desired voltage is preferably interposed between the external power source and the cooking pot emergency unlocking circuit. Throughout the whole description, when power is described to be received by/supplied to the cooking pot emergency unlocking circuit from the external power source, this formulation also includes regulated power received by/supplied to the cooking pot emergency unlocking circuit via a voltage converter, i.e., that power supplied by the external power source is regulated according to technical needs prior to entering the cooking pot emergency unlocking circuit. The cooking pot emergency unlocking circuit is designed to drive the motor of the cooking pot locking mechanism in an unlock direction when and only when the cooking pot emergency unlocking circuit does not receive power from the external power source and the cooking pot locking mechanism is in the lock position. The cooking pot emergency unlocking circuit comprises a power storing circuit part adapted to store power when the cooking pot emergency unlocking circuit is connected to the external power source and receives power therefrom. Said power storing circuit part of the cooking pot emergency unlocking circuit is further adapted to supply stored power to the motor of the cooking pot locking mechanism when and only when the cooking pot emergency unlocking circuit does not receive power from the external power source, in order to automatically unlock the cooking pot locking mechanism when the cooking pot locking mechanism is in the lock position and no power is available from the external power source. In other words, the circuit structure of the cooking pot emergency unlocking circuit excludes the motor of the cooking pot locking mechanism to be driven by stored power of the power storing part in an unlocking direction when power from the external power source is available. I.e., power stored in the power storing part is not supplied to the motor of the cooking pot locking mechanism as long as power from the external power source is available to the food processor and, thus, to the cooking pot emergency unlocking circuit, wherein it is herein understood that power is available from the external power source as long as a power supply connection is not broken, e.g. by unplugging, and there is no power failure. However, the latter is the case for the emergency unlock circuit of document US 6,363,755 B1. In this document, during operation of the washing machine when power is available and supplied from the external power source, both the lock and unlock signals are AC power signals supplied from a charged "lock signal" capacitor 70 and a charged "unlock signal" capacitor 74, respectively.

The power storing circuit part of the cooking pot emergency unlocking circuit may comprise at least one capacitor configured to store power while power is available and supplied from the external power source to the cooking pot emergency unlocking circuit, and to supply stored power from the at least one capacitor to the motor of the cooking pot locking mechanism when the cooking pot emergency unlocking circuit does not receive power, i.e., no power is available from the external power source. Thereby, the cooking pot locking mechanism can be unlocked automatically when the cooking pot locking mechanism is in the lock position and no power is available from the external power source, e.g., in case of a power failure or due to unplugging of the food processor from the external power source.

Preferably, the amount of power storable in the power storing circuit part and, especially, in the at least one capacitor of the power storing circuit part is sufficient for driving the motor to cause unlocking of the cooking pot locking mechanism when the power storing circuit part is discharged. In other words, preferably, the amount of stored and supplied power is sufficient for driving the motor in the unlock direction until the cooking pot locking mechanism enters the unlock position such that, in case of a power failure, the cooking pot locking mechanism can be automatically operated to enter the unlock position. A discharging time of the power storing circuit part may be determined by the capacitance of the at least one capacitor and a driving current of the motor.

The at least one capacitor of the power storing circuit part preferably is a so called 'Super Capacitor', i.e., a capacitor providing a very high capacitance value in a small packing size. The at least one capacitor preferably used for the power storing circuit part can store power up to an expected charging voltage in a very short time while providing a discharging time sufficient for driving the motor until the cooking pot locking mechanism has entered its unlock position, i.e., for completely transferring the cooking pot locking mechanism from its lock position to its unlock position. The discharging time is determined by the capacitance of the capacitor/'Super Capacitor' and the driving current of the motor and, thus, can be chosen to be sufficient for driving the motor to operate a complete transfer of the cooking pot locking mechanism from its lock position to its unlock position. As an example, a 'Super Capacitor' can have the following characteristics: 5,5 V rated voltage, 1,5 F rated discharge capacitance, 20 Ω AC Imp, 30 Ω DC Imp, -20% to +80% capacitance tolerance, equal to or less than 0,02mA leakage current within 24 hours, a working temperature of -40°C to 70°C and a weight of 3,5 g.

The power storing circuit part may be connected within the cooking pot emergency unlocking circuit in a manner that, while power is available and supplied from the external power source to the cooking pot emergency unlocking circuit, the power storing circuit part is configured to receive the power to be stored therein directly from the external power source and not as previously stored and then further supplied power from a capacitor interconnected between the external power source and the power storing circuit part or as power supplied from the external power source through said interconnected capacitor to the power storing circuit part.

In other words, the one capacitor of the power storing circuit part or a first capacitor in the power flow direction of a series of more than one capacitors connected in series in the power storing circuit part of the cooking pot emergency unlocking circuit is connected within the cooking pot emergency unlocking circuit so as to receive the power to be stored therein directly from the external power source while power is available and supplied from the external power source to the cooking pot emergency unlocking circuit and not from a capacitor interconnected between the external power source and the power storing circuit part. Accordingly, while power is supplied from the external power source to the cooking pot emergency unlocking circuit, the one or first capacitor of the power storing circuit part does not receive the power to be stored from an upstream capacitor not being a component of the power storing circuit part of the emergency unlocking circuit. The latter, however, is the case for the emergency unlock circuit of document US 6,363,755 B1. In this document, it is the upstream "lock signal" capacitor 70 which charges the "unlock signal" capacitor 74 such that energy from the lock signal capacitor is recycled as an unlock signal if power is lost. According to the present emergency unlocking circuit, however, each and every capacitor (of the present emergency unlocking circuit) only participates in control of the cooking pot locking mechanism when no power is available from the external power source or, said the other way round, each and every capacitor is exclusively used to supply power to the motor for driving the same in the unlock direction or control, especially delay, said supply of power to the motor in case the locking and unlocking circuit does not receive power, i.e., no power is available from the external power source.

Thus, preferably, the cooking pot emergency unlocking circuit is not designed in a manner that power stored in the at least one capacitor of the power storing circuit part for automatically unlocking the cooking pot locking mechanism, when the cooking pot locking mechanism is in the lock position and no power is available from the external power source, is power received from or through a capacitor interconnected between the external power source and the power storing circuit part, wherein said received power is previously stored in or supplied through said interconnected capacitor.

The cooking pot emergency unlocking circuit may further comprise a time delay circuit part adapted to delay power supply by the power storing circuit part to the motor when the cooking pot emergency unlocking circuit does not receive power from the external power source, i.e., no power is available from the external power source. The time delay circuit part is a safety feature to ensure that the cooking pot is only unlocked to allow its removal from the food processor base after cutting means, e.g., blades of the cooking pot, have come to a complete stop. The time delay circuit part may achieve the delay in power supply by the power storing circuit part to the motor, i.e., the delay in discharging of the power storing circuit part when the cooking pot emergency unlocking circuit does not receive power from the external power source, by maintaining a level of power present in the cooking pot emergency unlocking circuit during supply of power from the external power source for a predetermined, chosen time span and thereby keeping the motor operation direction to be such as to cause the cooking pot locking mechanism to lock the cooking pot to the base. In other words, the time delay circuit part may act as a temporary internal power source of the cooking pot emergency unlocking circuit.

Preferably, the time delay circuit part is connected within the cooking pot emergency unlocking circuit relative to the power storing part so as to prohibit establishment of an electrical connection of the power storing circuit part to the motor as long as stored power from the time delay circuit part is discharged and supplied to the cooking pot emergency unlocking circuit so as to exclude power stored in the power storing circuit part from being supplied to the motor during discharging time of the time delay circuit part, when the cooking pot emergency unlocking circuit does not receive power from the external power source, i.e., no power is available from the external power source. Thereby, discharging of the power storing circuit part when the cooking pot emergency unlocking circuit does not receive power from the external power source, i.e., no power is available from the external power source, is delayed. The time delay depends on the discharging time of the time delay circuit, which can be chosen as required, for example, by using a capacitor having characteristics as needed, as discussed above for the power storing circuit part.

A further aspect of the present disclosure is a food processor comprising the above-described cooking pot emergency unlocking circuit. According to claim 7 such a food processor comprises a cooking pot, and a base configured to receive the cooking pot. The base comprises a cooking pot locking mechanism configured to releasably lock the cooking pot to the base, a motor configured to operate the cooking pot locking mechanism to selectively enter a lock position or an unlock position, a cooking pot locking and unlocking control configured to control operation of the motor and, via the motor, operation of the cooking pot locking mechanism, and the above-described emergency unlocking circuit designed for unlocking the cooking pot from the base in case of power failure. The cooking pot locking mechanism is preferably bi-stable, i.e., stably remains in each of its lock and unlock positions when the motor is not operating the cooking pot locking mechanism. Preferably, the motor controlled by the cooking pot locking and unlocking control circuit and the motor operable by the cooking pot emergency unlocking circuit are the same device.

The cooking pot may comprise a cutting unit for cutting ingredients received in the cooking pot. The cutting unit is adapted to be operatively connected to a driving unit when the cooking pot is received in or on the base. Preferably, the driving unit for the cutting unit and the motor for operating the cooking pot emergency unlock are different components. The cutting unit can comprise a plurality of cutting blades configured to rotate inside the cooking pot for cutting action. More generally, the cutting unit may comprise cutting means configured to cut ingredients received in the cooking pot.

The time period for which power supply by the power storing circuit part to the motor is delayed when the cooking pot emergency unlocking circuit does not receive power from the external power source, i.e., no power from the external power source is available, may at least partially and preferably fully cover a time period the cutting unit, when operating to cut ingredients received in the cooking pot, needs to come to a complete stop after power is cut off or in case of a power failure. Especially, the discharging time of the time delay circuit can be chosen so as to cover a time span the cutting means of the cooking pot need to come to a complete stop when operating at full speed.

Moreover, the cooking pot locking mechanism can be configured to selectively provide a mechanical interlock between the base and the cooking pot when received in or on the base. Especially, the cooking pot locking mechanism may comprise a plurality of chuck elements movable between a locking position, in which each of the chuck elements lockingly engages the cooking pot with the base, and an unlocking position, in which the chuck elements allow removal of the cooking pot from the base.

The cooking pot locking and unlocking control may comprise at least one control processor and a cooking pot locking and unlocking circuit electrically connected to the motor and the at least one control processor. During normal power supply, the control processor may send control commands, e.g., a lock or unlock command, to the cooking pot locking and unlocking circuit, wherein the latter then causes the cooking pot locking mechanism to either enter its lock position or its unlock position in response to said control commands. The cooking pot emergency unlocking circuit may be connected to and form a part of the cooking pot locking and unlocking circuit, wherein, preferably, the cooking pot emergency unlocking circuit is integrated into the structure of the cooking pot locking and unlocking circuit so as to have circuit structure in common with the cooking pot locking and unlocking circuit.

The food processor may further comprise a lid for closing the cooking pot, wherein the cooking pot then comprises means for detecting if the cooking pot is closed by the lid or if the cooking pot is not closed by the lid. These means for detecting if the cooking pot is closed by the lid or if the cooking pot is not closed by the lid may, e.g., comprise a switch and/or an electrical circuit.

Further, the food processor may comprise a drive control for controlling operation of the cutting unit of the cooking pot, wherein the drive control is adapted to prevent or stop operation of the cutting unit when the cooking pot detecting means detects that the cooking pot is not closed by the lid. The drive control may, for example, be implemented as a microcontroller.

A detailed description of an exemplary embodiment of the claimed cooking pot emergency unlocking circuit is given in the following with reference to the figures which show schematically:
- Figs. 1A and 1B: a front view and side view of a food processor with which the cooking pot emergency unlocking circuit can be used;
- Fig. 2: a circuit design of the cooking pot emergency unlocking circuit;
- Fig. 3: power flow in the cooking pot emergency unlocking circuit of Fig. 2, when power from an external power source is available and supplied to the cooking pot emergency unlocking circuit;
- Fig. 4: power flow in the cooking pot emergency unlocking circuit of Fig. 2 in case of a power failure; and
- Fig. 5: the cooking pot emergency unlocking circuit of Fig. 2 comprising a time delay circuit part.

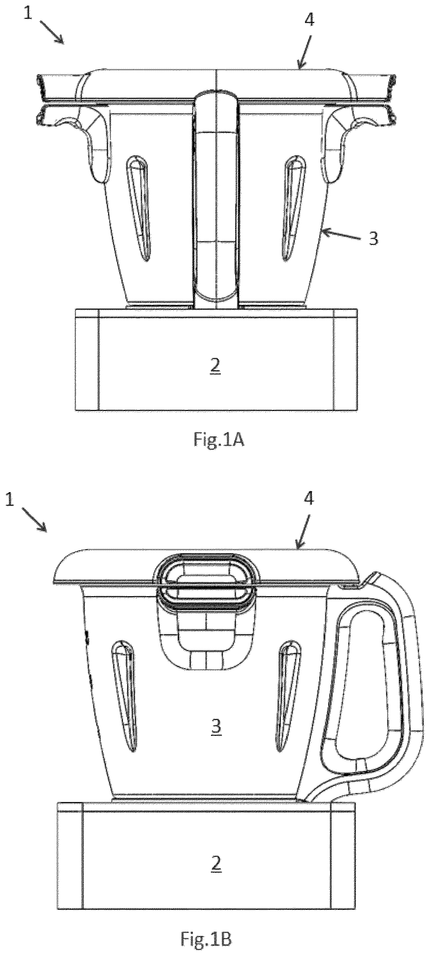

In Figs. 1A and 1B, a food processor 1 comprising a base 2 and a cooking pot 3 closed by a removable lid 4 and received on and/or in the base 2 is shown in front and side views, respectively. The cooking pot 3 is lockable to and removable from the base 2, wherein the corresponding locked and unlocked states of the cooking pot are controllable by a cooking pot locking and unlocking control which can be housed in the base 2. One or more sensors or other detecting means for sensing or detecting at least one of the cooking pot 3 being in position on and/or received in the base 2, and the lid 4 closing an opening of the cooking pot 3 may be present. Preferably, sensors for sensing both are present.

A cooking pot locking mechanism can be provided within the base 2, the cooking pot locking mechanism being configured to releasably lock the cooking pot 3 to the base 2. Further, the base 2 may house a motor configured to operate the cooking pot locking mechanism to selectively enter a lock or an unlock position. The base 2 may be further provided with a cooking pot locking and unlocking control configured to control operation of the motor and, via the motor, operation of the cooking pot locking mechanism. A cooking pot emergency unlocking circuit designed for unlocking the cooking pot 3 from the base 2 in case of power failure preferably is also present in the base 2 and especially forms part of, i.e., has circuit structure and components in common with the cooking pot locking and unlocking control.

The cooking pot 3 may comprise cutting means drivable by a driving unit, i.e., a motor, housed in the base 2, the driving unit configured to operate the cutting means preferably being separate from the motor configured to operate the cooking pot locking and unlocking mechanism. The cooking pot 3 and base 2 preferably comprise respective mating interfaces for operatively coupling the cooking pot 3 to components housed in the base 2, such as the motor for operating the cutting means. The base 2 may further comprise a drive control for controlling operation of the cutting means, the drive control preferably adapted to prevent or stop operation of the cutting means when the cooking pot is not closed by the lid, which may be detected by the above-mentioned detecting means.

When the cooking pot 3 is positioned on and/or received in the base 2 and the cooking pot locking and unlocking mechanism is in its lock position, there may be a mechanical interlock between the base 2 and the cooking pot 3. Especially, there may be one or more, preferably at least two or three locking elements housed in the base 2 and selectively movable to either engage the cooking pot 3 to couple the cooking pot 3 to the base 2 or release the cooking pot 3 allowing removal of the cooking pot 3 from the base 2.

The food processor 1 of Fig. 1 advantageously comprises a cooking pot emergency unlocking circuit designed for unlocking the cooking pot 3 from the food processor base 2 in case of power failure.

The cooking pot locking and unlocking control may comprise at least one control processor and a cooking pot locking and unlocking circuit electrically connected to the motor and the at least one control processor. Preferably, the cooking pot emergency unlocking circuit is connected to and forms a part of the cooking pot locking and unlocking circuit. Especially, the cooking pot emergency unlocking circuit can be integrated into the structure of the cooking pot locking and unlocking circuit so as to have circuit structure in common with the cooking pot locking and unlocking circuit. Thus, the motor used for locking and unlocking the cooking pot in reaction to a lock signal and an unlock signal of the cooking pot locking and unlocking control, respectively, and the motor to which power stored in the cooking pot emergency unlocking circuit is supplied in case of a power failure to unlock the cooking pot are the same component.

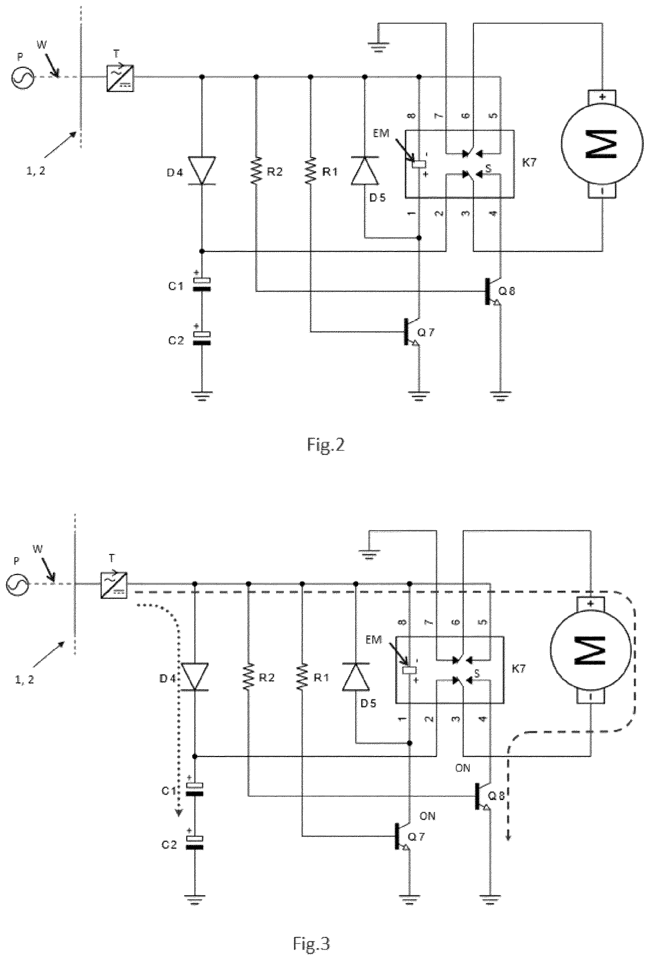

A possible circuit design of said cooking pot emergency unlocking circuit housed in the base 2 of the food processor 1 is illustrated in Fig. 2.

According to Fig. 2, the food processor 1 comprises a cable W (not shown in Fig. 1) extending from the base 2. This cable W is used for selectively connecting the food processor 1 to an external AC-power source P. Within the base 2, a AC to DC step down voltage converter T designed to convert AC power received from the external power source P to DC power, which preferably is a 12V DC regulator, is provided for supplying DC power to the cooking pot emergency unlocking circuit. The cooking pot emergency unlocking circuit comprises a motor M selectively drivable in opposite directions for operating the cooking pot locking mechanism to selectively enter its lock position or its unlock position, means K7 for controlling the operation direction of the motor M, and backup power means C1, C2, i.e., a power storing circuit part, adapted to store power when the cooking pot emergency unlocking circuit is connected to and receives power from the external power source P via the voltage converter T. The cooking pot emergency unlocking circuit is especially designed to allow supply of power from the backup power means C1, C2 to the motor only in case of a power failure, such as a power loss present in the external power supply or a power cut-off as, for example, caused by unplugging the food processor 1 from the external power source P, i.e., actively - being it intended or unintended - cutting off the food processor 1 from power of the external power source P. The supplied power being power stored within the backup power means C1, C2 of the cooking pot emergency unlocking circuit during normal power supply. Thereby, with said stored power, the motor can operate and cause the cooking pot locking and unlocking mechanism to enter its unlock position. As a consequence, the cooking pot 3 is automatically released from the base 2 in case of a power failure. The cooking pot emergency unlocking circuit design however excludes supply of stored power to the motor in order to cause operation of the cooking pot locking and unlocking mechanism to enter its unlock position during normal power supply, i.e., when the cooking pot emergency unlocking circuit is connected to and receives power from an external power source (via the voltage converter T). Such unlocking action can be controlled by the cooking pot locking and unlocking control of the food processor 1.

Design details of the cooking pot emergency unlocking circuit as shown in Fig. 2 are described in the following.

Within the cooking pot emergency unlocking circuit a number of circuit paths are arranged in parallel. In a first one of these circuit paths, the backup power means C1, C2 are provided wired in series and connected to ground. In the specific circuit design of Fig. 2, the backup power means are realized as two supercapacitors C1, C2 preferably having characteristics as detailed above. However, other realizations of the backup power means are conceivable, such as a single capacitor, as long as having the characteristics necessary for the intended function of providing sufficient backup power for unlocking the cooking pot from the base in case of power failure. A diode D4 is provided upstream the backup power means C1, C2, the diode D4 preventing activation of the motor operation direction control means K7 by reverse current, said activation causing the motor to be drivable in the lock direction. The cooking pot emergency unlocking circuit further comprises a circuit path allowing power stored in the backup power means C1, C2 to drive the motor M in an unlock (reverse) direction causing operation of the cooking pot locking and unlocking mechanism to enter its unlock position. Said reverse direction is the direction in which the motor is controlled to operate when the motor operation direction control means K7 is not activated, which inter alia is the case for a power failure. In the following, this circuit path is referred to as stored power supply path.

According to the specific circuit design of Fig. 2, the motor operation direction control means K7 is a relay. Instead of the relay, it is also conceivable to use a semiconductor arrangement for controlling motor operation direction. The relay K7 of Fig. 2 is an electromagnetic switch having eight ports 1, 2, 3, 4, 5, 6, 7 and 8 for electrical connection. It is however also conceivable that the relay is an electromechanical switch. Via the eight ports 1, 2, 3, 4, 5, 6, 7 and 8, the relay K7 is connected to a control circuit part and two load circuit parts. The control circuit part of the relay K7 is a second path of the number of parallel circuit paths of the cooking pot emergency unlocking circuit, said second path connecting to the relay K7 via ports 1 and 8 and comprising an electromagnet EM of the relay K7 provided in between ports 1 and 8. Via port 1 of the relay K7, said second path is connected to a collector of an npn-transistor Q7, the npn-transistor Q7 connected to ground via its emitter. A third one of the parallel paths comprises a resistor R1 connected in series with the base of the npn-transistor Q7. A fourth one of the parallel paths comprises a diode D5 connected with its forward direction end to the second path in between port 1 of the relay K7 and the collector of the npn-transistor Q7. Thereby, the diode D5 protects the transistor Q7 from damage due to reversed current. The relay K7 further has a switch arrangement S controlled by an electromagnetic field generated by the electromagnet EM. The switch arrangement S is configured to selectively establish electrical connections between ports 5 and 6 as well as between ports 3 and 4 of the relay K7 in a first switching position and establish electrical connections between ports 6 and 7 as well as between ports 2 and 3 of the relay K7 in a second switching position. The first switching position is an active switching position of the relay K7 which necessitates presence of the electromagnetic field generated by the electromagnet EM. The second switching position is a rest switching position of the relay K7 which the relay K7 takes automatically in the absence of the electromagnetic field.

The stored power supply path connects the backup power means C1, C2 to port 2 of the relay K7. Ports 3 and 6 of the relay K7 are connected to electrical ports of motor M, respectively, so that port 3, motor M and port 6 are wired in series. A fifth one of the parallel paths comprises a resistor R2 connected in series with the base of a further npn-transistor Q8. The collector of said further npn-transistor Q8 is connected to port 4 of the relay K7 and the further npn-transistor Q8 is connected to ground via its emitter. Finally, port 7 of the relay K7 is connected to ground.

Fig. 3 shows the power flow in the cooking pot emergency unlocking circuit of Fig. 2, when the cooking pot emergency unlocking circuit is supplied with and receives power from the external power source P. The power flow shown in Fig. 3 is what is to be understood as power flow during normal operation, i.e., when power is available and no power failure is present. The external power source P for example is a conventional home power supply socket providing 230 V voltage and up to 16 A current to the food processor 1 when plugged thereto via cable W.

The dashed (blue) arrow marked in Fig. 3 shows the power flow from the external AC-power source P via the AC to DC step down voltage converter T to motor M in a forward direction. Said power flow causes the electromotor EM of the relay K7 to generate an electromagnetic field causing the switch arrangement S of the relay K7 to establish electrical connections between ports 5 and 6 as well as between ports 3 and 4 of the relay K7. The power supplied from the external power source P via the voltage converter T to cooking pot emergency unlocking circuit thus flows through the motor M in a forward (locking) direction, i.e., with the switched electrical connection through ports 5 and 6 of the relay K7 being upstream the motor M and the switched electrical connection through ports 3 and 4 of the relay K7 being downstream of the motor M. Due to the power supply to the cooking pot emergency unlocking circuit, the npn-transistors Q7 and Q8 are ON, i.e., in a state allowing current flow from the collector to the emitter, when DC-power from the voltage converter T which itself receives AC-power from the external power source P is supplied to the base of the npn-transistor Q7 through resistor R1 via the third one of the parallel paths and to the base of the npn-transistor Q8 through resistor R2 via the fifth one of the parallel paths. With the npn-transistor Q7 being ON, the npn-transistor Q7 connects port 1 of the relay K7 to ground, thereby allowing current flow through the electromagnet EM of the relay K7. Current flow through the electromagnet EM causes the switching arrangement S to switch to is activate (first) switching position. With the npn-transistor Q8 being ON, the npn-transistor Q8 connects port 4 of the relay K7 to ground, thereby allowing current flow through the motor in the forward direction according to the active switching position of the relay K7.

The dotted (red) arrow marked in Fig. 3 shows the power flow from the external AC-power source P via the AC-to-DC-regulating voltage converter T to the backup power means C1, C2 during normal operation. The power flows according to the dashed and dotted arrows occur simultaneously, when the cooking pot emergency unlocking circuit is supplied with and receives DC-power from the voltage converter T when the latter is supplied with AC power form the external power source P. The power flow according to the dotted arrow may be referred to as simultaneous power flow. According to the simultaneous power flow, the DC-power supplied from the voltage converter T, when the voltage converter T receives AC-power from the external power source P, to the cooking pot emergency unlocking circuit flows into the first path through the diode D4 to the backup power means C1, C2. Power supply to the backup power means C1, C2 causes same to store power, while electrical connection of the backup power means C1, C2 to ground prevents overcharging.

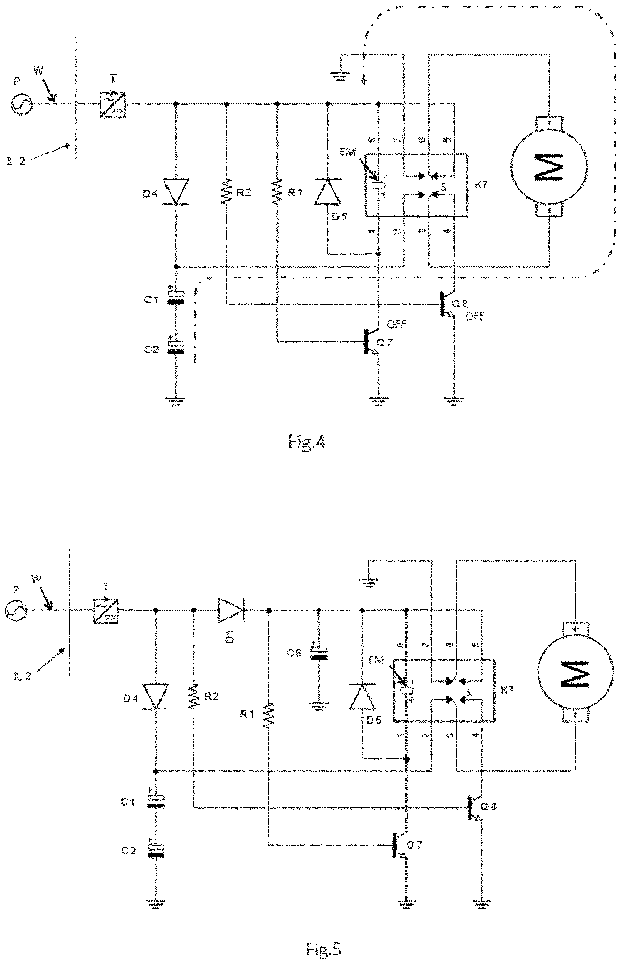

Fig. 4 shows the power flow in the cooking pot emergency unlocking circuit of Fig. 2 in case of a power failure, i.e., when no power is available from the external power source P even though the food processor is plugged in, or when the food processor is unplugged from the external power source P during operation. The only power flow now present in the cooking pot emergency unlock circuit of Fig. 2 is marked by the dash-dotted (green) arrow in Fig. 4, which is a power flow from the backup power means C1, C2 to the motor M in the reverse direction. In case of power failure, no power is available to the basis of the npn-transistors Q7 and Q8 so that said npn-transistors Q7 and Q8 block current flow, i.e., are in an OFF state. Thus, no power is available to the electromagnet EM of the relay K7 so that the switch arrangement S assumes its second switching position, i.e., its rest switching position, resulting in electrical connections being established between ports 6, 7 as well as between ports 2, 3 of the relay K7. In case of power failure, the stored power supplied from the backup power means C1, C2 thus flows through the motor M in a rearward direction, i.e., with the switched electrical connection through ports 2, 3 of the relay K7 being upstream the motor M and the switched electrical connection through ports 6, 7 of the relay K7 being downstream of the motor M, due to the motor M being connected to ground downstream port 7 of the relay K7.

Preferably, the backup power means C1, C2 are chosen such that the amount of stored and supplied power is sufficient for driving the motor M in the unlock direction, namely its reverse operation direction, until the cooking pot locking mechanism enters the unlock position. Thereby, in case of a power failure, the cooking pot locking mechanism can be automatically operated to enter the unlock position.

Fig. 5 shows a design of the cooking pot emergency unlocking circuit of Fig. 2 supplemented by a time delay circuit part comprising time delay means C6 realized as a capacitor (according to the specific circuit design of Fig. 5). Other realizations of the time delay means are conceivable. The time delay circuit part is designed as a sixth parallel path of the cooking pot emergency unlocking circuit, said sixth path comprising the capacitor C6 connected to ground. During normal operation power flow, i.e., when the cooking pot emergency unlocking circuit is supplied with and receives DC-power from the voltage converter T which itself receiving AC-power from the external AC-power source P, not only the power flows according to the dashed and dotted arrows as marked in Fig. 3 occur simultaneously but, additionally, power flow to the time delay circuit part occurs causing power to be stored in the capacitor C6. Reverse current from the capacitor C6 to the npn-transistor Q8 is prevented by a diode D1 connected in between the fifth and sixth parallel paths. In case of power failure, power stored in the capacitor C6 of the time delay circuit part is supplied to the npn-transistor Q7 through the third path and to the electromagnet EM through port 8 of the relay K7. By power supply to the npn-transistor Q7, same is kept in its ON state allowing the current supplied to the relay K7 to flow through the electromagnet EM. Thereby, the switch arrangement S is kept in its first activated switching position providing for motor operation in the forward direction. As soon as the stored power discharged from the capacitor C6 of the time delay circuit part is consumed, the relay K7 switches back to its second rest switching position allowing supply of power stored in the backup power means C1, C2 to the motor M in a reverse flow direction causing the motor M to operate in a reverse direction. Motor operation in the reverse, i.e., unlocking direction causes operation of the cooking pot locking and unlocking circuit to enter the unlock position.

As already explained above, the cooking pot emergency unlock circuit of Fig. 2 preferably forms part of a circuit design of a cooking pot locking and unlocking control for the food processor of Fig. 1. Such a cooking pot locking and unlocking control circuit also allows controlled power supply from the external power source P via the voltage converter T during normal operation to the relay K7 to cause controlled unlocking of the cooking pot locking and unlocking mechanism. This is realized by a circuit design blocking power supply to the electromagnet EM when an unlocking signal is received during normal operation, resulting in the switch arrangement S being in its second rest switching position allowing power supply to the motor M in a revers direction causing motor operation in the reverse, i.e., unlocking direction.

Although the present disclosure has been described in detail with reference to exemplary food processors, it should be understood that various changes, substitutions, and alterations can be made herein without departing from the invention as defined by the appended claims. The scope of the present disclosure is not intended to be limited to the particular food processors described herein.

## Claims

1. Cooking pot emergency unlocking circuit designed for unlocking a cooking pot (3) of a food processor (1) from a base (2) of the food processor (1) in case of power failure, the cooking pot emergency unlocking circuit comprising a power storing circuit part (C1, C2) adapted to store power when the cooking pot emergency unlocking circuit is connected to an external power source (P) and receives power therefrom,
wherein the power storing circuit part (C1, C2) of the cooking pot emergency unlocking circuit is further adapted to supply stored power to a motor (M) of a cooking pot locking mechanism configured to releasably lock the cooking pot (3) to the base (2) when and only when the cooking pot emergency unlocking circuit does not receive power from the external power source (P), in order to automatically unlock the cooking pot locking mechanism when the cooking pot locking mechanism is in the lock position and no power is available from the external power source (P).

2. Cooking pot emergency unlocking circuit of claim 1, wherein the power storing circuit part comprises at least one capacitor (C1, C2), the at least one capacitor (C1, C2) is configured to:
store power while power is supplied from the external power source (P) to the cooking pot emergency unlocking circuit, and to
supply stored power from the at least one capacitor (C1, C2) to the motor (M) of the cooking pot locking mechanism when the cooking pot emergency unlocking circuit does not receive power from the external power source (P), in order to automatically unlock the cooking pot locking mechanism when the cooking pot locking mechanism is in the lock position and no power is available from the external power source (P).

3. Cooking pot emergency unlocking circuit of claim 1 or 2, wherein the power storing circuit part (C1, C2) is connected within the cooking pot emergency unlocking circuit in a manner that, while power is supplied from the external power source (P) to the cooking pot emergency unlocking circuit, the power storing circuit part (C1, C2) is configured to receive the power to be stored therein directly from the external power source (P) and not as previously stored and then further supplied power from a capacitor interconnected between the external power source (P) and the power storing circuit part (C1, C2) or as power supplied from the external power source (P) through said interconnected capacitor to the power storing circuit part (C1, C2).

4. Cooking pot emergency unlocking circuit of claim 3 as far as dependent on claim 2, wherein the cooking pot emergency unlocking circuit is not designed in a manner that power stored in the at least one capacitor (C1, C2) of the power storing circuit part for automatically unlocking the cooking pot locking mechanism, when the cooking pot locking mechanism is in the lock position and no power is available from the external power source (P), is power received from or through a capacitor interconnected between the external power source (P) and the power storing circuit part, wherein said received power is previously stored in or supplied through said interconnected capacitor.

5. Cooking pot emergency unlocking circuit of any one of claims 1 to 4, further comprising a time delay circuit part (C6) adapted to delay power supply by the power storing circuit part (C1, C2) to the motor (M) when the cooking pot emergency unlocking circuit does not receive power from the external power source (P).

6. Cooking pot emergency unlocking circuit of claim 5, wherein the time delay circuit part (C6) is configured to delay discharging of the power storing circuit part (C1, C2) when the cooking pot emergency unlocking circuit does not receive power from the external power source (P) by maintaining a level of power present in the cooking pot emergency unlocking circuit during supply of power from the external power source (P) for a predetermined, chosen time span.

7. Food processor (1) comprising:
a cooking pot (3);
a base (2) configured to receive the cooking pot (3), the base (2) comprising:
a cooking pot locking mechanism configured to releasably lock the cooking pot (3) to the base (2);
a motor (M) configured to operate the cooking pot locking mechanism to selectively enter a lock position or an unlock position;
a cooking pot locking and unlocking control configured to control operation of the motor (M) and, via the motor (M), operation of the cooking pot locking mechanism; and
the cooking pot emergency unlocking circuit designed for unlocking the cooking pot (3) from the base (2) in case of power failure of any one of claims 1 to 6.

8. Food processor (1) of claim 7, wherein the cooking pot (3) comprises a cutting unit for cutting ingredients received in the cooking pot (3), the cutting unit adapted to be operatively connected to a driving unit when the cooking pot (3) is positioned on and/or received in the base (2), the cutting unit optionally comprising a plurality of cutting blades configured to rotate inside the cooking pot (3).

9. Food processor (1) of claim 8 as far as comprising the cooking pot emergency unlocking circuit of claim 5 or 6, wherein a time period for which power supply by the power storing circuit part (C1, C2) to the motor (M) is delayed when the cooking pot emergency unlocking circuit does not receive power from the external power source (P) at least partially and preferably fully covers a time period the cutting unit, when operating to cut ingredients received in the cooking pot (3), needs to come to a complete stop after power is cut off or in case of a power failure.

10. Food processor (1) of any one of claims 7 to 9, wherein the cooking pot locking mechanism is configured to selectively provide a mechanical interlock between the base (2) and the cooking pot when received in the base (2).

11. Food processor (1) of claim 10,
wherein the cooking pot locking mechanism comprises a plurality of chuck elements movable between a locking position, in which each of the chuck elements lockingly engages the cooking pot (3) with the base (2), and an unlocking position, in which the chuck elements allow removal of the cooking pot (3) from the base (2).

12. Food processor (1) of any one of claims 7 to 11, wherein the cooking pot locking and unlocking control comprises at least one control processor and a cooking pot locking and unlocking circuit electrically connected to the motor (M) and the at least one control processor.

13. Food processor (1) of claim 12, wherein the cooking pot emergency unlocking circuit of any one of claims 1 to 6 is connected to and forms part of the cooking pot locking and unlocking circuit, wherein, preferably, the cooking pot emergency unlocking circuit is integrated into the structure of the cooking pot locking and unlocking circuit so as to have circuit structure in common with the cooking pot locking and unlocking circuit.

14. Food processor (1) of any one of claims 7 to 13, further comprising a lid (4) for closing the cooking pot (3), wherein the cooking pot (3) comprises means for detecting if the lid (4) closes the cooking pot (3) or if the cooking pot (3) is not closed by the lid (4).

15. Food processor (1) of claim 14 as far as dependent on claim 8, further comprising a drive control for controlling operation of the cutting unit of the cooking pot (3), wherein the drive control is adapted to prevent or stop operation of the cutting unit when the cooking pot detecting means detects that the cooking pot (3) is not closed by the lid (4).
